**Europäisches Patentamt**

**European Patent Office**

**Office européen des brevets**

(11) Veröffentlichungsnummer: **0 222 202 B1**

# EUROPÄISCHE PATENTSCHRIFT

(45) Veröffentlichungstag der Patentschrift: **09.09.92**

(21) Anmeldenummer: **86114382.4**

(22) Anmeldetag: **17.10.86**

(51) Int. Cl.⁵: **G02B 26/08**, G02B 23/02, G02B 7/18

(54) Elektro-magnetisch angetriebener Schwingspiegel.

(30) Priorität: **02.11.85 DE 3538898**

(43) Veröffentlichungstag der Anmeldung:
**20.05.87 Patentblatt 87/21**

(45) Bekanntmachung des Hinweises auf die
Patenterteilung:
**09.09.92 Patentblatt 92/37**

(84) Benannte Vertragsstaaten:
**DE FR IT**

(56) Entgegenhaltungen:
EP-A- 0 048 364        EP-A- 0 121 470
DE-A- 2 728 824        DE-A- 3 213 076
GB-A- 2 042 207        GB-A- 2 088 048
US-A- 3 654 553        US-A- 3 814 365

(73) Patentinhaber: **Firma Carl Zeiss**

**W-7920 Heidenheim (Brenz)(DE)**

(72) Erfinder: **Grupp, Manfred**
**Ziegelbachstrasse 1**
**W-7923 Königsbronn(DE)**
Erfinder: **Stacklies, Horst**
**Langertstrasse 35**
**W-7080 Aalen(DE)**

## Beschreibung

Die Erfindung betrifft die Verwendung eines elektro-magnetischen Antriebssystems, das aus wenigstens einem an einem hin- und herbeweglich geführten Steg befestigten Permanent-Magneten mit zur Bewegungsrichtung des ihn tragenden Teils quergerichteter Polung (N-S) und wenigstens einem Spulenpaar gebildet ist, dessen Feldspulen auf jeweils einer magnetischen Rückschlußplatte aufgebracht sind, wobei diese Platten hinsichtlich ihrer Formgebung der Bewegungsbahn des Permanent-Magneten angepaßt und einander unmittelbar gegenüberliegend zu beiden Seiten der Bewegungsbahn des Permanent-Magneten ortsfest angeordnet sind.

Ein derartiges Antriebssystem ist in der DE 27 28 824 C3 beschrieben. Es wird zur Bewegung der Blendenlamellen und/oder Verschlußsektoren eines photographischen Kameraverschlußes verwendet.

Als Antriebssystem für die oszillierende Bewegung des Sekundärspiegels eines Spiegelteleskops (im folgenden "Wobbelspiegel" genannt) werden Elektromagnet-Antriebssysteme verwendet, die Magnetspulensysteme mit Magnetkernen enthalten, welche mit Magnetankern Luftspalte bilden, deren Größe vom Drehwinkel der Spiegelanordnung abhängt. Derartige Antriebssysteme sind in der DE 32 13 076 A1 beschrieben. Die Nachteile dieser vorbekannten Antriebssysteme für Wobbelspiegel von Spiegelteleskopen bestehen darin, daß die auftretenden Zugkräfte stark vom Luftspalt abhängen und deshalb mathematisch sehr schwer berechenbar sind, daß Fertigungstoleranzen das System stark beeinflussen und daß die Kraft nur in einer Richtung wirkt. Für die Rückstellung werden daher mechanische Federn benutzt, die den Frequenzgang wiederum stark beeinflussen.

Der Erfindung lag deshalb die Aufgabe zugrunde, ein Antriebssystem für den Wobbelspiegel eines Spiegelteleskops anzugeben, das schnelle Reaktionszeiten aufweist, eine leichte mathematische Beschreibung des Systems erlaubt und keine mechanische Kopplung erforderlich macht.

Diese Aufgabe wurde erfindungsgemäß dadurch gelöst, daß ein für einen photographischen Kameraverschluß bekanntes Antriebssystem als lineares Antriebssystem für die Schwingbewegungen des Wobbelspiegels eines Spiegelteleskops um eine Drehachse verwendet wird.

In einem vorteilhaften Ausführungsbeispiel der Erfindung werden zusätzlich zum Antriebssystem ein Wegmeßsystem und ein Tachogenerator verwendet. Das Wegmeßsystem besteht beispielsweise aus einem berührungslos arbeitenden Wegmesser, der im Handel unter dem Namen "Transducer" bekannt ist, und der die jeweilige Ist-Position des Spiegels während der Bewegung aufnimmt. Der Tachogenerator ist nach Art des Antriebssystem aufgebaut, hat aber eine höhere Wicklungszahl der Spule, um die induzierte Spannung zu vergrößern.

In einem weiteren vorteilhaften Ausführungsbeispiel wird das lineare Antriebssystem zur Bewegung eines Sekundärspiegels um zwei Achsen verwendet. Dazu wird der Spiegel an einem Drehgelenk befestigt, das zentrisch in einer gedachten Kugelschale angeordnet ist, und das Linear-Antriebssystem ist so ausgeführt, daß es einen Teil der gedachten Kugelfläche darstellt.

Die mit der Erfindung erzielten Vorteile bestehen insbesondere darin, daß die Antriebskraft des Linear-Antriebssystems direkt proportional dem Strom ist, daß das mechanische System mit der Federkonstante des Drehgelenks und dem Massenträgheitsmoment der bewegten Masse sehr leicht definiert werden kann und daß die bewegte Masse vom Antriebssystem mechanisch völlig entkoppelt ist, wodurch das Auftreten störender Einflüsse durch Reibung, Lagerkräfte und Verspannung verhindert wird. Außerdem ändert sich die Geometrie des Luftspaltes nicht während der Bewegung. Ein weiterer Vorteil liegt darin, daß das verwendete Antriebssystem die Wahl beliebiger Modulationsfunktionen gestattet.

Ein Ausführungsbeispiel der Erfindung ist in der Zeichnung dargestellt und wird im folgenden näher beschrieben.

Fig. 1 eine schematische Darstellung in drei Ansichten der erfindungsgemäßen Anordnung eines Linear-Antriebssystems am Wobbeispiegel eines Spiegelteleskop;

Fig. 2 die schematische Darstellung in der Draufsicht auf einen Wobbelspiegel mit vier symmetrisch zur Drehachse angeordneten Linear-Antriebssystemen;

Fig. 3 die prinzipielle Wirkungsweise des für den Wobbelspiegel verwendeten Linear-Antriebssystems;

Fig. 4 eine vereinfachte Systemdarstellung zur Veranschaulichung der Momentgleichungen;

Fig. 5 die schematische Darstellung für die Anordnung der Antriebssysteme an einem um zwei Drehachsen oszillierenden Wobbelspiegel;

Fig. 6 ein Blockdiagramm für die elektronische Schaltung des Antriebssystems.

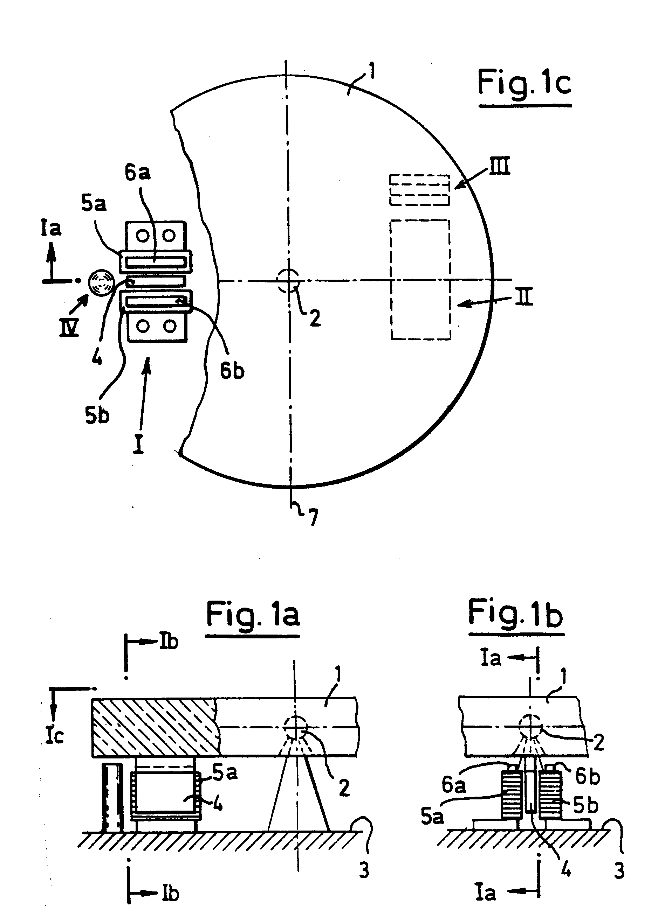

In der Darstellung der Fig. 1 ist in Fig. 1a eine Seitenteilansicht des Wobbelspiegels gezeigt, in der Fig. 1b dieselbe Teilansicht um die Achse Ib geklappt und in Fig. 1c eine Draufsicht auf den unteren Teil des Wobbelspiegels. In diesen Darstellungen ist der Wobbelspiegel mit 1 bezeichnet, mit 2 der Umriß eines Drehgelenks, das ortsfest mit der Unterlage 3 verbunden ist. Das Antriebssystem besteht aus dem Permanent-Magnet 4, der zwischen elektrischen Feldspulen 5a, 5b angeordnet ist. In den Feldspulen 5a, 5b befinden sich Eisenkerne 6a, 6b. In der in Fig. 1c gezeigten Ansicht von unten auf den Wobbelspiegel ist das links von der Drehachse 7 angeordnete Antriebselement mit dem Bezugszeichen I bezeichnet. Mit dem Bezugszeichen II ist ein zweites, symmetrisch auf der rechten Seite zur Erhöhung der Antriebskraft angeordnetes Antriebssystem bezeichnet. Das Bezugszeichen III bezeichnet einen Linear-Tachometer, der nach dem gleichen Prinzip aufgebaut ist wie die mit I und II bezeichneten Antriebssysteme, jedoch eine höhere Wicklungszahl aufweist. Mit dem Bezugszeichen IV ist ein Wegmeßsystem bezeichnet, das unter dem Namen "Transducer" bekannt ist und das berührungslos die Ist-Position des Wobbelspiegels aufnimmt.

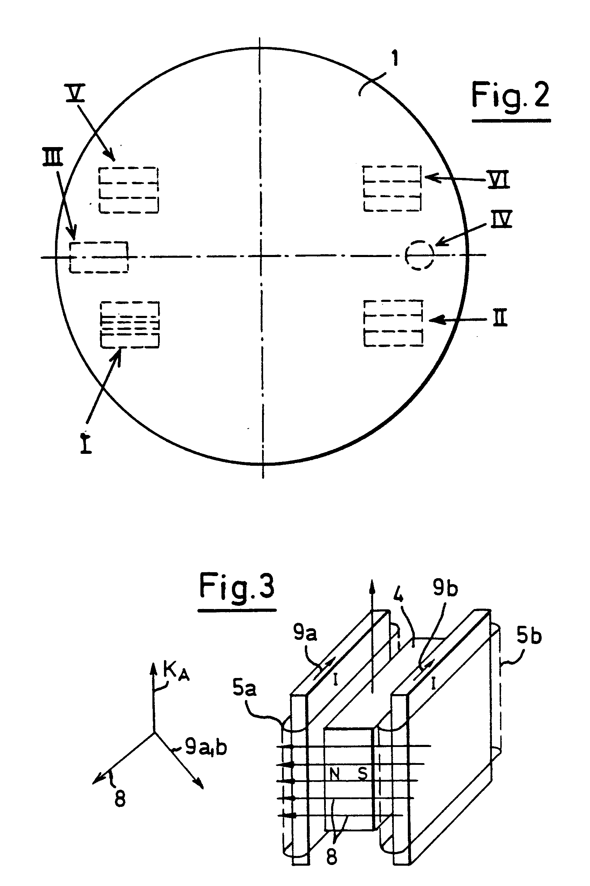

In der Darstellung der Fig. 2 sind symmetrisch zur Drehachse 7 des Wobbelspiegels 1 vier Antriebssysteme I,II,V,VI angeordnet. Mit III und IV sind wieder ein Linear-Tachogenerator und ein Wegmeßsystem bezeichnet. Die Anordnung von vier Antriebssystemen am Wobbelspiegel verteilt die Antriebskraft auf vier Punkte. Die Krafteinwirkung auf diese Weise führt zu einer geringeren Deformierung der Spiegeloberfläche.

In der Fig. 3, welche die prinzipielle Wirkungsweise des Antriebssystems darstellt, ist der Verlauf der Feldlinien des Permanent-Magneten 4 mit 8 bezeichnet. In den Spulen 5a, 5b fließt der Strom in der mit 9a und 9b bezeichneten Richtung. Die Richtung der vom Antriebssystem erzeugten Kraft K zeigt bei vorgegebener Richtung 9a, 9b des Stromes und 8 des Feldes des Dauermagneten senkrecht nach oben.

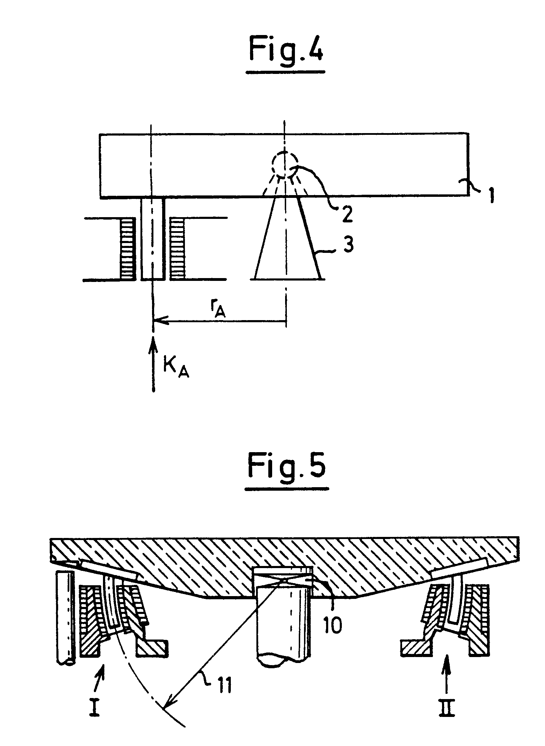

Aus der vereinfachten Systemdarstellung der Fig. 4 können die Momentgleichungen abgeleitet werden. Wenn mit $K_A$ die Richtung der Antriebskraft bezeichnet wird,
mit B die Luftspaltinduktion,
mit I die Leiterlänge im Luftspalt,
mit I der elektrische Strom,
mit $r_A$ der Hebelarm,
mit C die Federkonstante des Spiegeldrehgelenks,
mit $\phi$ der Auslenkwinkel des Spiegels,
mit $\odot$ das Massenträgheitsmoment des Spiegels und
mit $\ddot{\varphi}$ die Winkelbeschleunigung,
so ergeben sich folgende Momentgleichungen:
Antriebsmoment
$M_A = M_\phi + M_\odot$
Antriebsmoment
$M_A = B \cdot I \cdot I \cdot r_A$
Moment
$M_\phi = c \cdot \phi$
Moment

$$M_\odot = \odot \cdot \ddot{\varphi}$$

Antriebskraft
$K_A = B \cdot I \cdot J$
Aus diesen Momentgleichungen ist zu erkennen, daß die Antriebskraft $K_A$ des verwendeten Linear-Antriebssystem direkt proportional dem Strom ist, und daß das mechanische System mit der Federkonstante des Drehgelenks und dem Massenträgheitsmoment der bewegten Masse sehr leicht definiert werden kann.

Da bei einem solchen Systemaufbau die bewegte Masse mechanisch völlig entkoppelt ist, gibt es keine störenden Einflüsse durch Reibung, Lagerkräfte und Verspannungen. Eine Drehbewegung um eine Achse läßt sich mit diesem Antriebssystem auch für große Drehwinkel leicht erzeugen.

In der Darstellung der Fig. 5 ist der Wobbelspiegel 1 an einem Drehgelenk 10 befestigt, das sich im Mittelpunkt einer Kugel vom Radius 11 befindet. Die vier Antriebssysteme, von denen I und II in der Darstellung sichtbar sind, sind so angeordnet, daß sie einen Teil der Kugeloberfläche bilden.

Da ein Antriebssystem aus zwei unabhängigen Wicklungen besteht, kann ein Antriebssystem vorteilhaft so gestaltet werden, daß eine Wicklung zur Erzeugung der Antriebskraft genutzt wird, die andere Entwicklung mit modifizierten Wickeldaten als Tachogenerator dient.

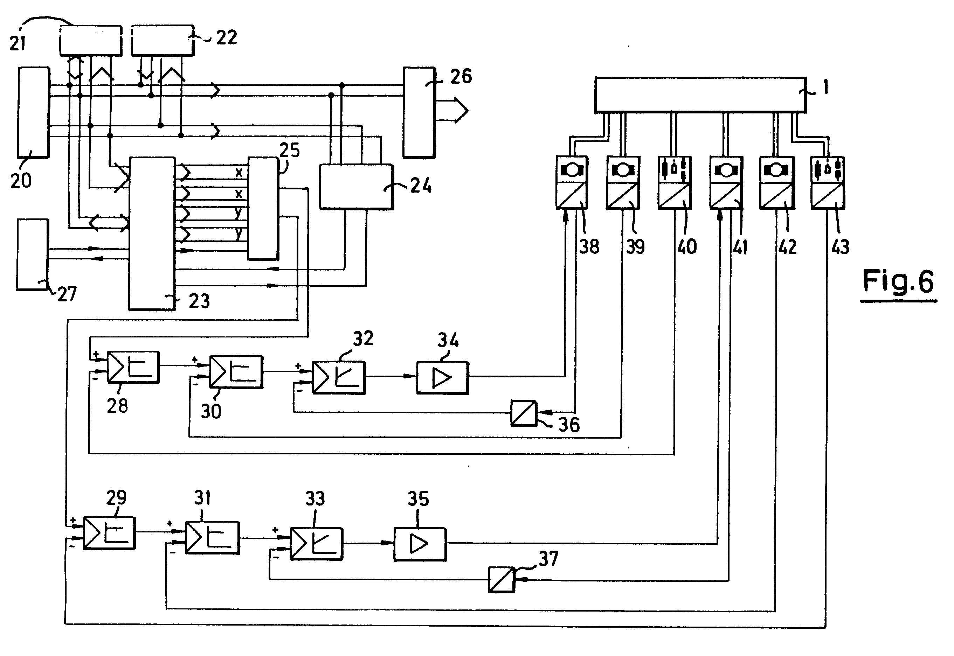

Das in Fig. 6 dargestellte Blockdiagramm zeigt eine mögliche Ansteuerung für das für den Wobbelspiegel verwendete Antriebssystem und den Aufbau des elektronischen Regelsystems für eine Zweiachsenregelung. Mit Hilfe eines Mikrocomputers und eines Digital-Analogwandlers können sehr einfach Funktionskurven zur Ansteuerung eines Regelsystems erzeugt werden. Man wird solche Funktionen wählen, die ein ruck- und stoßfreies Arbeiten des Schwenkspiegelsystems ermöglichen. Die Kontrolle des Systems erfolgt über ein kaskadiert aufgebautes Regelkreissystem mit Hilfe der Signalgeber für den Weg, die Geschwindigkeit und für den Strom am Spiegel 1. Die Elektronik ist untergliedert in folgende Komponenten:

a) Digitalelektronik mit Mikrocomputer und Peripherielektronik

b) Analogelektronik mit 2 Regelkreiskaskaden für eine 2-Achsenregelung

c) Spiegel mit Linear-Antriebssystemen und Signalgebern.

Zu a)

Die Digitalelektronik besteht aus Mikroprozessor 20, Daten- und Programmspeicher 21,22, einer parallelen-seriellen Schnittstellenelektronik 23, einer Steuerpulselektronik 24, einem 2-fachen Digital-Analogwandler 25 und Schnittstellen 26, 27 zur Dateneingabe und Datenübergabe. Der Mikrocomputer berechnet die optimale oder gewünschte Modulationsfunktion und gibt über den Digital-Analogwandler 25 die Sollfunktion als Analogspannung an die jeweiligen Regelkaskaden.

Zu b)

Die Analogelektronik besteht aus zwei Regelkreiskaskaden mit den Reglern 28,29 für die Position (Auslenkung), den Reglern 30,31 für die Geschwindigkeit und den Reglern 32,33 für die dem Antriebsstrom proportionale Beschleunigung. Für die Ansteuerung der Linear-Antriebssysteme 38,41 dienen die Leistungsverstärker 34,35. Ein solcher Systemaufbau bietet den Vorteil einer Regelung mit hoher Genauigkeit und Geschwindigkeit bei guter Stabilität.

Zu c)

Am Spiegel 1 befinden sich die Linear-Antriebssysteme 38,41 für je eine Achse. Der Strom durch diese Linear-Antriebssysteme wird mit den Elementen 36,37 in eine dem Strom proportionale Spannung umgewandelt und dient als Beschleunigungsrückmeldung für die Regler 32,33.

Als Signalgeber am Spiegel 1 dienen Lineartachogeneratoren 39,42 für die Rückmeldung einer der Geschwindigkeit proportionalen Spannung für die Regler 30,31, die Elemente 40,43 erfassen die Spiegelauslenkung und geben eine der Auslenkung proportionale Spannung an die Regler 28,29 als Rückmeldung.

**Patentansprüche**

1. Verwendung eines linearen elektro-magnetischen Antriebssystems (I), bestehend aus wenigstens einem an einem hin- und herbeweglich geführten Steg befestigten Permanent-Magneten (4) mit zur Bewegungsrichtung des ihn tragenden Teils quer gerichteter Polung (N-S) und wenigstens einem Spulenpaar, dessen Feldspulen (5a, 5b) auf jeweils einer magnetischen Rückschlußplatte aufgebracht sind, wobei diese Platten hinsichtlich ihrer Formgebung der Bewegungsbahn des Permanent-Magneten angepaßt und einander unmittelbar gegenüberliegend zu beiden Seiten der Bewegungsbahn des Permanent-Magneten ortsfest angeordnet sind, als Antriebssystem zum Antrieb für die Schwingbewegung des oszillierenden Sekundärspiegels (1) eines Spiegelteleskops um mindestens eine Drehachse (7).

2. Verwendung eines elektro-magnetischen Antriebssystems nach Anspruch 1, dadurch gekennzeichnet, daß zusätzlich zum Antriebssystem ein Wegmeßsystem (IV) und ein Tachogenerator (III) verwendet werden.

3. Verwendung eines elektro-magnetischen Antriebssystems nach Anspruch 2, dadurch gekennzeichnet, daß als Tachogenerator (III) ebenfalls ein Antriebssystem (I) verwendet wird.

4. Verwendung eines elektro-magnetischen Antriebssystems nach einem der Ansprüche 1-3, dadurch gekennzeichnet, daß als Befestigung des oszillierenden Sekundärspiegels (1) ein Drehgelenk (10) verwendet wird, das zentrisch in einer gedachten Kugelschale vom Radius (11) angeordnet ist.

**Claims**

1. Utilization of a linear electromagnetic drive system (I), consisting of at least one permanent magnet (4) mounted on an arm guided for reciprocating movement and having a polarity (N-S) which is directed transversely to the direction of movement of the arm on which it is supported and with at least one coil pair (5a, 5b) whose field coils are each mounted on a magnetic return plate with these plates being adapted to the path of the movement of the permanent magnet with respect to their form and being fixedly mounted directly opposite each other on respective sides of the path of movement of the permanent magnet, as drive system for the oscillatory movements of the wobble mirror (1) of a reflecting telescope about at least one rotational axis (7).

2. Utilization of an electromagnetic drive system according to claim 1, characterized in that supplementary to the drive system a position measuring system (IV) and a tachometer-generator (III) are used.

3. Utilization of an electromagnetic drive system according to claim 2 characterized in that instead of the tachometer-generator (III) a second drive system (II) is used.

4. Utilization of an electromagnetic drive system according to one of the claims 1-3, characterized in that the wobble mirror (1) is attached to a rotational joint (10) which is centrally mounted in an imaginary sphere having radius (11).

**Revendications**

**1.** Utilisation d'un système de commande électromagnétique linéaire (I), comprenant au moins un aimant permanent (4) fixé à un support guide mobile en va-et-vient, de manière que la polarisation (N-S) de l'aimant soit orientée transversalement à la direction de mouvement de son support, et au moins une paire de bobines de champ (5a, 5b) fixées chacune sur une plaque de fermeture du circuit magnétique, la conformation de ces plaques étant adaptée au trajet de mouvement de l'aimant permanent et les plaques étant disposées fixes, directement l'une en face de l'autre, des deux côtés du trajet de mouvement de l'aimant permanent, en tant que système de commande pour produire le mouvement d'oscillation du miroir secondaire oscillant (1) d'un télescope à miroir autour d'au moins un axe de rotation (7).

**2.** Utilisation d'un système de commande électromagnétique selon la revendication 1, caractérisée par l'utilisation, en plus du système de commande, d'un système de mesure de déplacement (IV) et d'une génératrice tachymétrique (III).

**3.** Utilisation d'un système de commande électromagnétique selon la revendication 2, caractérisée en ce qu'un système de commande (I) est également utilisé comme génératrice tachymétrique (III).

**4.** Utilisation d'un système de commande électromagnétique selon une des revendications 1-3, caractérisée en ce que, pour la fixation du miroir secondaire oscillant (1), on utilise une articulation tournante (10) placée au centre d'une cuvette sphérique fictive ayant le rayon (11).

## Fig. 1c

## Fig. 1a

## Fig. 1b

Fig.2

Fig.3

# Fig.4

# Fig.5

Fig.6

EP 0 222 202 B1